(19) Europäisches Patentamt
European Patent Office
Office européen des brevets

(11) **EP 4 358 170 A1**

(12) **EUROPEAN PATENT APPLICATION**

(43) Date of publication:
**24.04.2024 Bulletin 2024/17**

(21) Application number: **23204801.7**

(22) Date of filing: **20.10.2023**

(51) International Patent Classification (IPC):
**H01M 4/04** (2006.01)   **H01M 4/1393** (2010.01)
**H01M 4/62** (2006.01)

(52) Cooperative Patent Classification (CPC):
**H01M 4/622; H01M 4/0404; H01M 4/1393**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.10.2022 KR 20220136755**

(71) Applicants:
• **Samsung SDI Co., Ltd.
Yongin-si, Gyeonggi-do 17084 (KR)**
• **IUCF-HYU (INDUSTRY-UNIVERSITY
COOPERATION
FOUNDATION HANYANG UNIVERSITY)
Seoul 04763 (KR)**

(72) Inventors:
• **PARK, Keemin
04762 Seoul (KR)**

• **JUNG, Hyeseung
17084 Yongin-si (KR)**
• **AN, Hoyong
17084 Yongin-si (KR)**
• **LEE, Kyuseo
17084 Yongin-si (KR)**
• **HAN, Seung-Hun
17084 Yongin-si (KR)**
• **KIM, Soochan
17084 Yongin-si (KR)**
• **CHO, Chaewoong
17084 Yongin-si (KR)**
• **MYEONG, Seungcheol
04761 Seoul (KR)**
• **SONG, Taeseup
03180 Seoul (KR)**
• **PAIK, Ungyu
06289 Seoul (KR)**

(74) Representative: **Marks & Clerk LLP
15 Fetter Lane
London EC4A 1BW (GB)**

(54) **METHOD OF MANUFACTURING ELECTRODE FOR RECHARGEABLE LITHIUM BATTERY, ELECTRODE MANUFACTURED THEREFROM, AND RECHARGEABLE LITHIUM BATTERY INCLUDING THE ELECTRODE**

(57)    Provided are a method of manufacturing an electrode for a rechargeable lithium battery, an electrode manufactured therefrom, and a rechargeable lithium battery including the electrode. The method of manufacturing an electrode for a rechargeable lithium battery includes preparing an electrode active material layer slurry including an electrode active material and a polymer binder, coating the electrode active material layer slurry on a current collector and drying it while applying an electric field to form an active material layer, wherein the polymer binder includes a water-soluble binder and an ionic polymer.

FIG. 1B

## Description

### BACKGROUND

#### 1. Field

A method of manufacturing an electrode for a rechargeable lithium battery and an electrode manufactured therefrom, and a rechargeable lithium battery including the electrode are disclosed.

#### 2. Description of the Related Art

As a demand on portable electronics such as a laptop, a cellphone, and the like is sharply increased, and also, a demand on an electric vehicle, an electric cart, an electric wheelchair, a motorbike, and the like is increased, research on a repetitively chargeable/dischargeable high performance rechargeable battery is actively being made.

In addition, as gradual depletion of carbon energy and an interest in environmental conservation are increased, a demand on a hybrid electric vehicle (HEV) and an electric vehicle (EV) is being gradually increased around the world. Accordingly, as more interest and research on a vehicle battery as a core part of HEV or EV is concentrated, high-rate charge technology of fast charging of a battery needs to be urgently developed. For example, the high-rate charge is very important in an EV having no additional energy source.

This description of the related art is provided only to provide certain background information of the present disclosure. Accordingly, statements made in this description of the related art are not admissions of prior art.

### SUMMARY

Studies on high-capacity active materials have been conducted for rechargeable lithium batteries with enhanced electrochemical performances, while the importance of polymer binders has been underestimated because of their low content in an electrode and negligible electrochemical properties.

Polymer binders are indispensable additives that have a significant impact on dispersibility of a slurry, physicochemical properties of the electrode, and subsequent electrochemical performances of the rechargeable lithium batteries.

An embodiment provides a method of manufacturing an electrode for a rechargeable lithium battery which is capable of controlling a behavior of the polymer binder in the electrode to improve adhesion to the current collector, and improving electrochemical properties such as high-rate charging characteristics and cycle-life characteristics of the rechargeable lithium battery.

Another embodiment provides an electrode manufactured according to the above manufacturing method and a rechargeable lithium battery including the same.

According to an embodiment, a method of manufacturing an electrode for a rechargeable lithium battery includes

preparing an electrode active material layer slurry including an electrode active material and a polymer binder, and
coating the electrode active material layer slurry on a current collector and drying it while applying an electric field to form an active material layer,
wherein the polymer binder includes a water-soluble binder and an ionic polymer.

According to another embodiment, an electrode for a rechargeable lithium battery manufactured by the aforementioned manufacturing method is provided.

According to another embodiment, a rechargeable lithium battery including the electrode for the rechargeable lithium battery is provided.

At least some of the above and other features of the invention are set out in the claims.

The electrode manufactured according to the aforementioned manufacturing method has improved electrochemical performance and can be usefully applied to a rechargeable lithium battery.

### BRIEF DESCRIPTION OF THE DRAWINGS

FIG. 1A is a diagram showing the behavior of a binder in a conventional negative electrode manufacturing process and FIG. 1B is a diagram showing the behavior of a binder in a negative electrode manufacturing process according to an embodiment.

FIGS. 2 to 5 are schematic views illustrating rechargeable lithium batteries according to embodiments.

FIG. 6A shows the results of measuring the adhesion between the negative electrode active material layer of the negative electrode and the Cu current collector according to Comparative Example 1A and Examples 1A to 5A.

FIG. 6B is a graph showing the results of evaluating the peel strength according to depth from the negative electrode surface of the negative electrode according to Example 5A and Comparative Example 1A.

FIG. 7A shows the electrolyte permeability evaluation results of the negative electrodes according to Example 5A and Comparative Example 1A.

FIG. 7B shows the contact angle measurement results (0 sec and 5 sec) of the electrolyte on the surfaces of the negative electrodes according to Example 5A and Comparative Example 1A.

FIG. 7C shows an Electrochemical Impedance Spectroscopy (EIS) spectrum of a negative electrode symmetric cell according to Example 5A and Comparative Example 1A.

FIG. 7D is a graph showing the results of calculating the MacMullin number of the negative electrodes manufactured according to Example 5A and Comparative Example 1A.

FIG. 8 shows voltage profiles at a first 0.1 C cycle of the half-cells according to Example 5H and Comparative Example 1H in the 0.01 to 1.2 V vs. Li/Li$^+$ voltage range.

FIG. 9 shows the voltage profiles after the formation cycle at the discharging (lithiation) rates of (a) 0.5 C, (c) 1.0 C, and (e) 2.0 C of the half-cells prepared according to Example 5H and Comparative Example 1H and differential capacity vs. voltage (dQ/dV vs. V), (b), (d), and (f) according to the voltage obtained from the discharge curves in (a), (c), and (e), respectively.

FIG. 10 shows surface images of the cathode at discharge (lithiation) C-rates of 0.5, 1.0, and 2.0 after formation cycles of the half-cell according to Example 5H and Comparative Example 1H.

FIGS. 11A and 11B show the initial charge/discharge voltage profiles of the full cells according to Example 5F and Comparative Example 1F at rates of 0.1 C and 0.2 C, respectively.

FIG. 12 shows the EIS results of a full cell according to Example 5F and Comparative Example 1F after undergoing chemical cycles at 0.1 and 0.2 C, respectively.

FIGS. 13A and 13B show the results of high-rate charging tests of full cells according to Example 5F and Comparative Example 1F.

FIG. 14A is a graph showing cycle-life characteristics of full cells according to Example 5F and Comparative Example 1F at 1.0 C.

FIG. 14B is a graph showing cycle-life characteristics of full cells according to Example 5F and Comparative Example 1F at 2.0 C.

FIG. 15 shows the results of EIS evaluation of the full cells according to Example 5F and Comparative Example 1F after 100 cycles at 2.0 C.

## DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only, and is not intended to limit the present disclosure. The singular expression includes the plural expression unless the context clearly dictates otherwise.

As used herein, "combination thereof" means a mixture, laminate, composite, copolymer, alloy, blend, reaction product, and the like of the constituents.

In the drawings, the thickness of layers, films, panels, regions, and/or the like, are exaggerated for clarity and like reference numerals designate like elements throughout the specification, and duplicative descriptions thereof may not be provided. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

Herein, "or" is not to be construed as an exclusive meaning, for example, "A or B" is construed to include A, B, A+B, and/or the like. As used herein, the term "and/or" includes any and all combinations of one or more of the associated listed items. Expressions such as "at least one of," when preceding a list of elements, modify the entire list of elements and do not modify the individual elements of the list. As used herein, the term "substantially" and similar terms are used as terms of approximation and not as terms of degree, and are intended to account for the inherent deviations in measured or calculated values that would be recognized by those of ordinary skill in the art. Also, the term "about" and similar terms, when used herein in connection with a numerical value or a numerical range, are inclusive of the stated value and mean within an acceptable range of deviation for the particular value as determined by one of ordinary skill in the art, considering the measurement in question and the error associated with measurement of the particular quantity (e.g., the limitations of the measurement system). For example, "about" may mean within one or more standard deviations, or within ± 30%, 20%, 10%, 5% of the stated value. Also, any numerical range recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

If (e.g., when) it is described that an element is "on," "connected to," or "coupled to" another element, it will be understood that the element may be provided directly on another element or still another element may be interposed therebetween. On the other hand, if (e.g., when) it is described that an element is "directly on" another element, still another element is not interposed therebetween.

It will be understood that, although the terms "first," "second," and "third" may be utilized herein to describe one or more suitable elements, components, regions, layers, and/or sections, these elements, components, regions, layers, and/or sections should not be limited by these terms. These terms are only utilized to distinguish one element, component, region, layer, or section from another region, layer, or section. Thus, a first element, component, region, layer, or section described herein may be termed a second element, component, region, layer, or section without departing from the teachings of the present specification.

As utilized herein, the singular forms "a," "an," and "the" are intended to include the plural forms, including "at least one," unless the content (e.g., amount) clearly indicates otherwise. As used herein, expressions such as "at least one," "one of," and "selected from," if (e.g., when) preceding a list of elements, should not be construed as being limited to the singular, but may modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

The terms "include," "includes," "including," "comprise," "comprises," "comprising," "having," "has," and/or "have" if (e.g., when) utilized in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be utilized herein to easily describe one element or feature's relationship to another element or feature. It will be understood that the spatially relative terms are intended to encompass different orientations of a device in utilization or operation in addition to the orientation illustrated in the drawing. For example, if (e.g., when) a device in the drawings is turned over, elements described as "below" or "beneath" other elements or features would then be "above" or "over" the other elements or features. Thus, the example term "below" may encompass both (e.g., opposite) orientations of above and below. The device may be otherwise oriented (rotated 90 degrees or at other orientations), and the spatially relative terms utilized herein may be interpreted accordingly.

As used herein, the terms "use," "using," and "used" may be considered synonymous with the terms "utilize," "utilizing," and "utilized," respectively.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

Unless otherwise defined, all terms (including chemical, technical and scientific terms) utilized herein have the same meaning as commonly understood by one of ordinary skill in the art to which the present disclosure belongs. In some embodiments, it will be further understood that terms, such as those defined in commonly utilized dictionaries, should be interpreted as having a meaning that is consistent with their meaning in the context of the relevant art and the present disclosure, and will not be interpreted in an idealized or overly formal sense unless expressly so defined herein.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

As utilized herein, the term "particle diameter" of particles refers to an average diameter if (e.g., when) particles are spherical and refers to an average major axis length if (e.g., when) particles are non-spherical. A particle diameter of particles may be measured utilizing a particle size analyzer (PSA). A "particle diameter" of particles is, for example, an "average particle diameter." An average particle diameter refers to, for example, a median particle diameter (D50).

The median particle diameter (D50) is a particle size corresponding to a 50 % cumulative volume if (e.g., when) a particle size distribution measured through a laser diffraction method is calculated from particles having a smaller particle size. In some embodiments, a "particle diameter" or an "average particle diameter" may be measured from a transmission electron microscope (TEM) image, a scanning electron microscope (SEM) image, and/or the like.

D50 refers to a particle size corresponding to a 50 % cumulative volume if (e.g., when) a particle size distribution measured through a laser diffraction method is calculated from particles having a smaller particle size.

In some embodiments, the term "group" may refer to a group (i.e., column) of elements in the periodic table of the elements according to the International Union of Pure and Applied Chemistry ("IUPAC") Groups 1-18 group classification system. In some embodiments, the term "group" may refer to a chemical functional group, e.g., an "alkyl group."

The term "electrode active material" as utilized herein refers to an electrode material that may undergo lithiation and delithiation.

The term "negative electrode active material" as utilized herein refers to a negative electrode material that may undergo lithiation and delithiation.

The terms "lithiate" and "lithiating" as utilized herein refer to a process of adding lithium to an electrode active material.

The terms "delithiate" and "delithiating" as utilized herein refer to a process of removing lithium from an electrode active material.

The terms "charge" and "charging" as utilized herein refer to a process of providing electrochemical energy to a battery.

The terms "discharge" and "discharging" as utilized herein refer to a process of removing electrochemical energy from a battery.

The term "positive electrode" as utilized herein refers to an electrode at which electrochemical reduction and lithiation occur during a discharging process.

The term "negative electrode" as utilized herein refers to an electrode at which electrochemical oxidation and delithiation occur during a discharging process.

Hereinafter, a method of manufacturing an electrode for a rechargeable lithium battery according to an embodiment will be described.

The method of manufacturing an electrode for a rechargeable lithium battery includes

preparing an electrode active material layer slurry including an electrode active material and a polymer binder, and
coating the electrode active material layer slurry on a current collector and drying it (i.e., the electrode active material layer slurry) while applying an electric field to form an active material layer,
wherein the polymer binder includes a water-soluble binder and an ionic polymer.

The electrode active material may be a negative electrode active material or a positive electrode active material.

The negative electrode active material may include a carbon-based negative electrode active material that is a material that reversibly intercalates/deintercalates lithium ions, a silicon-carbon composite, or a combination thereof.

The carbon-based negative electrode active material may include crystalline carbon, amorphous carbon, or a combination thereof. The crystalline carbon may be graphite such as non-shaped, sheet-shaped, flake-shaped, sphere-shaped, or fiber-shaped natural graphite or artificial graphite. The amorphous carbon may be a soft carbon, a hard carbon, a mesophase pitch carbonization product, calcined coke, and the like.

The carbon-based negative electrode active material may have an average particle diameter (D50) of, for example, about 1 $\mu$m to about 50 $\mu$m, for example, about 1 $\mu$m to about 40 $\mu$m, about 1 $\mu$m to about 30 $\mu$m, about 1 $\mu$m to about 25 $\mu$m, about 1 $\mu$m to about 20 $\mu$m, about 2 $\mu$m to about 50 $\mu$m, about 5 $\mu$m to about 50 $\mu$m, about 10 $\mu$m to about 50 $\mu$m, or about 15 $\mu$m to about 50 $\mu$m. When the carbon-based negative electrode active material with the particle diameter ranges is used, energy density may be increased, while sufficient voids between particles may be concurrently (e.g., simultaneously) secured. Herein, the average particle diameter is obtained by randomly selecting 20 carbon-based negative electrode active material particles from an electron microscope image of the electrode to measure each particle diameter and obtain a particle diameter distribution therefrom and then, taking a particle diameter (D50) at 50 volume% of a cumulative volume from the particle diameter distribution.

The silicon-carbon composite may include a silicon-based material and amorphous carbon, or crystalline carbon in addition to the silicon-based material and the amorphous carbon. Herein, the silicon-based material may be silicon (Si) or a silicon oxide (SiO$_x$, 0 < x < 2).

When the silicon-carbon composite includes the silicon-based material and the amorphous carbon, the silicon-carbon composite may be an assembly of the silicon-based material and the amorphous carbon or the silicon-based material coated with the amorphous carbon on the surface. Herein, the silicon-based material and the amorphous carbon may be mixed in a weight ratio of about 1 : 99 to about 60 : 40.

When the silicon-carbon composite includes the crystalline carbon in addition to the silicon-based material and the amorphous carbon, the crystalline carbon and the silicon-based material are assembled to form an assembly, on which the amorphous carbon may be coated. Herein, a content of the silicon-based material may be about 1 wt% to about 60 wt%, or, for example, about 3 wt% to about 60 wt% based on 100 wt% of the total silicon-based negative electrode active material. In addition, in the silicon-based negative electrode active material, a content of the amorphous carbon may be about 20 wt% to about 60 wt% based on 100 wt% of the total silicon-based negative electrode active material, and a content of the crystalline carbon may be about 20 wt% to about 60 wt% based on 100 wt% of the total silicon-based negative electrode active material.

The silicon (e.g., of the silicon-carbon composite and/or the silicon-based material) may have a particle diameter of about 10 nm to about 30 $\mu$m but according to an embodiment, about 10 nm to about 1000 nm, and according to another embodiment, about 20 nm to about 150 nm.

When the amorphous carbon is coated to form a layer, the amorphous carbon may have a thickness of about 5 nm to about 100 nm.

The water-soluble binder may include a rubber-based binder, a polymer resin binder, or a combination thereof. The rubber-based binder may include, for example, a styrene-butadiene rubber, an acrylated styrene-butadiene rubber, an acrylonitrile-butadiene rubber, an acrylic rubber, a butyl rubber, a fluorine rubber, or a combination thereof. The polymer resin binder may include, for example, polyethylene oxide, polyvinylpyrrolidone, polyacrylonitrile, an ethylene propylene diene copolymer, polyvinylpyridine, chlorosulfonated polyethylene, latex, a polyester resin, an acrylic resin, a phenol resin, an epoxy resin, a polyvinyl alcohol, or a combination thereof.

The water-soluble binder may be included in an amount of about 0.1 wt% to about 10 wt%, for example, about 0.5 wt% to about 5 wt%, or about 1 wt% to about 3 wt%, based on 100 wt% of the negative electrode active material layer.

The ionic polymer may be a cellulose-based compound. The ionic polymer may have a negative charge in an aqueous medium. By applying an electric field that induces positive charges to the current collector, electrostatic attraction is generated toward the bottom of the negative electrode, thereby suppressing the migration behavior of the ionic polymer having a negative charge.

The cellulose-based compound may include, for example, carboxylmethyl cellulose, hydroxypropylmethyl cellulose, methyl cellulose, an alkali metal salt thereof, or a combination thereof. The alkali metal may be Li, Na, K, etc. The ionic polymer may be included in an amount of about 0.1 wt% to about 3 wt%, or about 0.1 wt% to about 1.5 wt% based on 100 wt% of the negative electrode active material layer.

The negative electrode active material layer may include other negative electrode active materials in addition to the negative electrode active material described above. For example, the negative electrode active material layer may further include a silicon-based negative electrode active material and/or a tin-based negative electrode active material. In this case, the capacity of the negative electrode can be maximized.

The silicon-based negative electrode active material may include silicon, $SiO_x$ (0 < x < 2), a Si-Q alloy (where Q is selected from an alkali metal, an alkaline-earth metal, a Group 13 element, a Group 14 element (excluding Si), a Group 15 element, a Group 16 element, a transition metal, a rare earth element, and a combination thereof).

The tin-based negative electrode active material may be, for example, tin, tin oxide (e.g., $SnO_x$ (0 < x $\leq$ 2 or 1 < x $\leq$ 2)), a Sn-R alloy (where R is selected from an alkali metal, an alkaline-earth metal, a Group 13 element, a Group 14 element (excluding Sn), a Group 15 element, a Group 16 element, a transition metal, a rare earth element, and a combination thereof), or a combination thereof. The elements Q and R may include, for example, Mg, Ca, Sr, Ba, Ra, Sc, Y, Ti, Zr, Hf, Rf, V, Nb, Ta, Db, Cr, Mo, W, Sg, Tc, Re. , Bh, Fe, Pb, Ru, Os, Hs, Rh, Ir, Pd, Pt, Cu, Ag, Au, Zn, Cd, B, Al, Ga, Sn, In, Tl, Ge, P, As, Sb , Bi, S, Se, Te, or Po.

The silicon-based negative electrode active material and/or tin-based negative electrode active material may be included in an amount of about 0 wt% to about 60 wt%, about 1 wt% to about 50 wt%, about 1 wt% to about 40 wt%, about 1 wt% to about 30 wt%, or about 5 wt% to about 20 wt% based on 100 wt% of the negative electrode active material in the negative electrode active material layer. Herein, a cost may not only be reduced, but also high capacity may be achieved.

In the negative electrode active material layer, a content of the negative electrode active material may be about 80 wt% to about 99.5 wt%, for example, about 85 wt% to about 99 wt%, about 90 wt% to about 99 wt%, or about 95 wt% to about 98 wt% based on a total weight of the negative electrode active material layer.

The negative electrode active material layer may optionally include a conductive material in addition to the negative electrode active material and the polymer binder. The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, etc. in a form of a metal powder or a metal fiber; a conductive polymer such as a polyphenylene derivative; or a mixture thereof. The conductive material may be included in an amount of about 0.1 wt% to about 10 wt%, for example, about 0.5 wt% to about 5 wt%, or about 1 wt% to about 3 wt% based on 100 wt% of the negative electrode active material layer.

A thickness of the negative electrode active material layer is not particularly limited but may be about 20 $\mu$m to about 500 $\mu$m according to intended uses or standards, for example, about 20 $\mu$m to about 300 $\mu$m, about 20 $\mu$m to about 200 $\mu$m, or about 30 $\mu$m to about 100 $\mu$m.

The current collector is not particularly limited but may be, for example, a copper foil, a nickel foil, a stainless steel foil, a titanium foil, or a polymer substrate coated with a conductive metal.

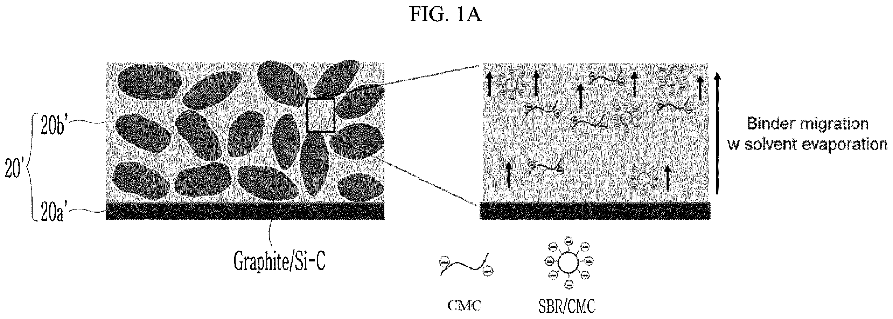

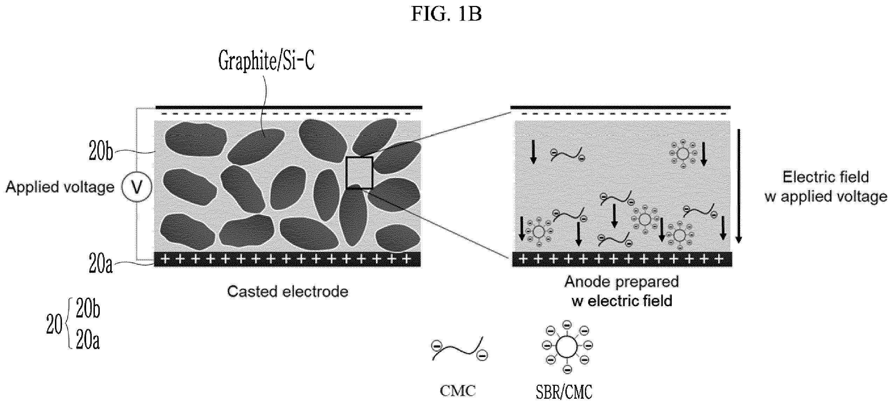

Hereinafter, a method of manufacturing the negative electrode for a rechargeable lithium battery will be described with reference to FIGS. 1A and 1B. FIG. 1A is a diagram showing the behavior of a binder in a conventional negative electrode manufacturing process, and FIG. 1B is a diagram showing the behavior of a binder in a negative electrode manufacturing process according to an embodiment.

In FIGS. 1A and 1B, an example of using a graphite and silicon-carbon composite as the negative electrode active material and a carboxylmethyl cellulose (CMC)/styrene-butadiene rubber (SBR) binder (hereinafter, referred to as a CMC/SBR polymer binder) as the polymer binder will be illustrated.

The CMC/SBR polymer binder is an aqueous binder that is widely used in aqueous negative electrode systems. CMC is a cellulose derivative including $\beta$-linked glucopyranose monomers with varying degrees of substitution (DS) of carboxymethyl (-CH$_2$COOH) groups. The carboxymethyl groups of CMC, which are derived from hydroxyl (-OH) groups on cellulose, contribute to the aqueous solubility of CMC compared with insoluble cellulose. The carboxymethyl and hydroxyl groups of CMC form hydrogen bonding with water, allowing CMC to act as a thickener in an aqueous slurry. The carboxymethyl group of CMC can be dissociated into a carboxylate anion (-CH$_2$COO-) in an aqueous medium. Therefore, CMC adsorbed on a graphite surface via hydrophobic interaction creates a negative charge on graphite, making an electrostatically repulsive force between graphite particles. This repulsive force can improve the dispersibility of a slurry by suppressing the agglomeration of graphite particles.

SBR is a synthetic rubber including styrene and butadiene units. Because SBR has high flexibility, excellent heat resistance, and a strong binding force, a negative electrode fabricated with SBR could have enhanced physicochemical properties. Particularly, the aromatic ring of SBR interacts with the Cu current collector, providing adhesion strength between the negative electrode film and Cu, and acting as a primary binder in the negative electrode.

As shown in FIG. 1A, conventionally, the negative electrode active material (e.g., Graphite/Si-C) is dispersed in an aqueous medium with a low binder content to prepare a negative electrode active material slurry 20b' and then, the negative electrode active material slurry 20b' is coated on the Cu current collector 20a' and dried to obtain a negative electrode 20'. Herein, the polymer binder moves to the negative electrode surface due to evaporation of the solvent by a capillary force during the drying process. This binder migration behavior causes non-uniform binder distribution in a longitudinal direction of the negative electrode and deteriorates adhesion between the negative electrode active material layer and the Cu current collector. Furthermore, when a large amount of the binder is present on the negative electrode surface, it may block pores and hinder easy movement of an electrolyte, which deteriorates Li-ion kinetics and high-rate charging characteristics of the negative electrode. Accordingly, the binder migration behavior is required to be controlled during the drying process to improve electrochemical characteristics of rechargeable lithium batteries.

As shown in FIG. 1B, the negative electrode active material (e.g., Graphite/Si-C) is dispersed in an aqueous medium to prepare a negative electrode active material slurry 20b and then, the negative electrode active material slurry 20b is coated on the Cu current collector 20a and dried to obtain a negative electrode 20. Because the CMC/SBR polymer binder, which is an ionic binder, has negative charges in a neutral aqueous medium, an electric field may be applied during the drying process to make the current collector positively charged and thus generate electric attention, resultantly suppressing the binder migration behavior.

When the electric field is applied during the drying process, the migration behavior of the polymer binder may be effectively suppressed in the negative electrode 20, so that the polymer binder may be uniformly distributed in the longitudinal direction. The binder uniformly distributed in the negative electrode may improve Li-ion kinetics and electrochemical performance (e.g., constant current charge capacity, cycle-life characteristics) of rechargeable lithium batteries. In other words, the electric field-treated negative electrode may improve Li-ion kinetics and reduce an overvoltage during the lithiation process and exhibit fast charging performance and improved cycle stability, compared with a non-electric field-treated negative electrode 20' of FIG. 1A.

When the electric field is applied, a voltage applied herein may be greater than or equal to about 1 kV, greater than or equal to about 2 kV, greater than or equal to about 3 kV, greater than or equal to about 4 kV, greater than or equal to about 5 kV, or greater than or equal to about 6 kV and less than or equal to about 25 kV, less than or equal to about 24 kV, less than or equal to about 23 kV, less than or equal to about 22 kV, less than or equal to about 21 kV, or less than or equal to about 20 kV. Within the ranges, sufficient charges are introduced into the current collector to suppress the migration behavior of the polymer binder.

The negative electrode manufactured in the above manufacturing method has improved electrochemical performance and thus may be usefully applied to rechargeable lithium batteries.

When analyzed with a contact angle analysis equipment (Phoenix 300, SEO, Suwon, South Korea), the negative electrode may have a contact angle with respect to the electrolyte of less than or equal to about 60 degrees, for example, less than or equal to about 55 degrees, or less than or equal to about 50 degrees.

The MacMullin number ($N_M$) of the negative electrode calculated using Equation 1 may be less than or equal to about 26.5 or less than or equal to about 26.

[Equation 1]

$$N_M = \frac{R_{ion} \cdot A \cdot \sigma_0}{d} \quad (1)$$

wherein $R_{ion}$ is the ionic resistance of the negative electrode ($\Omega$), A is an area of the electrode ($cm^2$), $\sigma_0$ is the ionic conductivity of the electrolyte (S $cm^{-1}$), and d is the thickness of the electrode ($\mu m$). $R_{ion}$ is obtained from EIS (Electrochemical Impedance Spectroscopy) analysis at an open-circuit voltage of a cell with a frequency range of 100 kHz to 1Hz and an amplitude of 20 mV by using Potentiostat (ZIVE BP2A, Won-ATech Co., Ltd., Korea). The ionic conductivity is measured at room temperature (25 °C).

The descriptions of the negative electrode can be equally applied to the positive electrode manufactured by using a water-soluble binder and an ionic polymer as a binder and applying an electric field.

A positive electrode for a rechargeable lithium battery may include a current collector and a positive electrode active material layer on the current collector. The positive electrode active material layer includes a positive electrode active material and a polymer binder, and the polymer binder may include a water-soluble binder and an ionic polymer. The water-soluble binder and the ionic polymer are as described above.

For example, the positive electrode may further include an additive that can serve as a sacrificial positive electrode.

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide may include lithium nickel-based oxide, lithium cobalt-based oxide, lithium manganese-based oxide, lithium iron phosphate-based compound, cobalt-free lithium nickel-manganese-based oxide, or a combination thereof.

As an example, the following compounds represented by any one of the following chemical formulas may be used. $Li_aA_{1-b}X_bO_{2-c}D_c$ ($0.90 \leq a \leq 1.8$, $0 \leq b \leq 0.5$, and $0 \leq c \leq 0.05$); $Li_aMn_{2-b}X_bO_{4-c}D_c$ ($0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, and $0 \leq \alpha \leq 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, and $0 < \alpha < 2$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ ($0.90 \leq a \leq 1.8$ and $0.001 \leq b \leq 0.1$); $Li_aCoG_bO_2$ ($0.90 \leq a \leq 1.8$ and $0.001 \leq b \leq 0.1$); $Li_aMn_{1-b}G_bO_2$ ($0.90 \leq a \leq 1.8$ and $0.001 \leq b \leq 0.1$); $Li_aMn_2G_bO_4$ ($0.90 \leq a \leq 1.8$ and $0.001 \leq b \leq 0.1$); $Li_aMn_{1-g}G_gPO_4$ ($0.90 \leq a \leq 1.8$ and $0 \leq g \leq 0.5$); $Li_{(3-f)}Fe_2(PO_4)_3$ ($0 \leq f \leq 2$); or $Li_aFePO_4$ ($0.90 \leq a \leq 1.8$).

In the above chemical formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

The positive electrode active material may be, for example, a high nickel-based positive electrode active material having a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive electrode active material may be capable of realizing high capacity and can be applied to a high-capacity, high-density rechargeable lithium battery.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The positive electrode active material layer may further include a conductive material. The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminium, silver, etc., in a form of a metal powder or a metal fiber; a conductive polymer such as a polyphenylene derivative; or a mixture thereof.

Al may be used as the current collector, but is not limited thereto.

An embodiment provides a rechargeable lithium battery including a negative electrode, a positive electrode, and an electrolyte. In the rechargeable lithium battery, the negative electrode may be a negative electrode manufactured by applying an electric field as described above, and/or the positive electrode may be a positive electrode manufactured by applying an electric field as described above.

The electrolyte may include a non-aqueous organic solvent and a lithium salt.

The non-aqueous organic solvent serves as a medium for transmitting ions taking part in the electrochemical reaction of a battery.

The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, Lil, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethane sulfonate, lithium difluorobis(oxalato)phosphate (LiDFOB), and lithium bis(oxalato) borate (LiBOB).

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film including any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, SrTiOs, BaTiOs, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

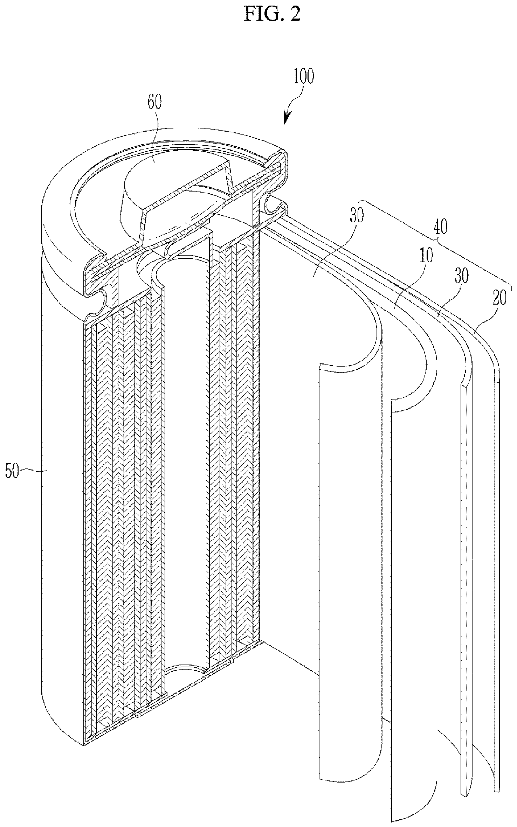

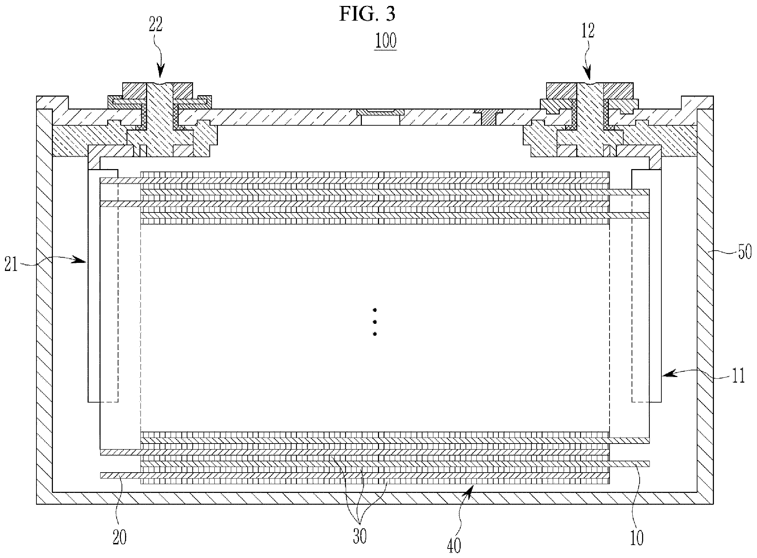

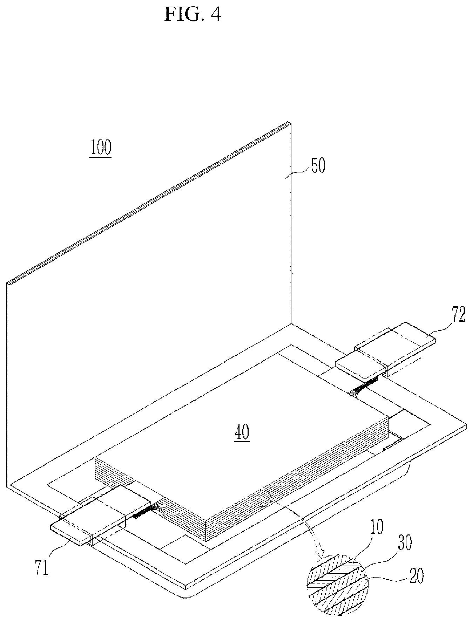

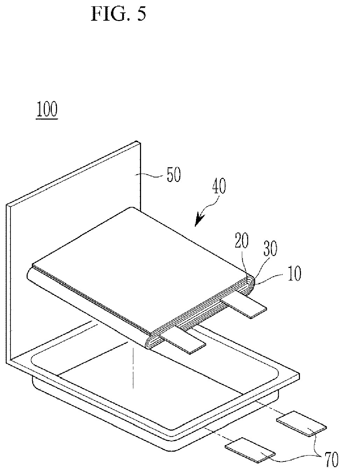

The rechargeable lithium battery may be classified into cylindrical, prismatic, pouch, or coin-type batteries, and the like depending on their shape. FIGS. 2 to 5 are schematic views illustrating rechargeable lithium batteries according to embodiments. FIG. 2 shows a cylindrical battery, FIG. 3 shows a prismatic battery, and FIGS. 4 and 5 show pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to an embodiment may be applied to automobiles, mobile phones, and/or various types of electric devices, as non-limiting examples.

The following Examples and Comparative Examples are provided in order to highlight characteristics of one or more embodiments, but it will be understood that the Examples and Comparative Examples are not to be construed as limiting the scope of the embodiments. Further, it will be understood that the embodiments are not limited to the particular details described in the Examples and Comparative Examples.

**Example 1A: Manufacture of Negative Electrode**

Graphite, a silicon-carbon composite, a 1.0 wt% CMC aqueous solution, and a 40% SBR emulsion in a weight ratio of 87.0:10.8:1:1.2 based on a solid content were added to water to prepare slurry for forming a negative electrode active material layer. The silicon-carbon composite was an assembly containing Si, graphite, and amorphous carbon (pitch carbide) in a weight ratio of 30:40:30.

The slurry for forming a negative electrode active material layer was mixed at 2000 rpm with a Thinky mixer for 6 minutes. The obtained slurry for forming a negative electrode active material layer was coated with a loading amount of 13 mg cm$^{-2}$ on a Cu current collector (a thickness: 8 $\mu$m) by using a doctor blade.

The coated electrode was immediately moved to a space where an electric field was applied according to a voltage (3 kV) and then, dried at 110 °C for 10 minutes.

When the voltage was applied, a distance between two electrodes was maintained at 15 cm. After the drying, the negative electrode was calendered to achieve a target density of 1.68 g cc$^{-1}$.

**Examples 2A to 5A: Manufacture of Negative Electrode**

Each negative electrode was manufactured in the same manner as in Example 1A except that the applied voltage was changed into 7 kV, 10 kV, 15 kV, and 20 kV, for Examples 2A, 3A, 4A, and 5A, respectively.

**Comparative Example 1A: Manufacture of Negative Electrode**

A negative electrode was manufactured in the same manner as in Example 1A except that the applied voltage was set to 0 kV to conduct no electric field treatment process.

**Evaluation Example 1: Adhesion between negative electrode active material layer and current collector**

The negative electrodes of Comparative Example 1A and Examples 1A to 5A were evaluated with respect to adhesion between negative electrode active material layer and Cu current collector by conducting a 180° peeling test. The 180° peeling test is a method of indirectly predicting a binder distribution in an electrode, because the less migration, the higher adhesion. Adhesion strength of the negative electrodes was measured by using a universal testing machine (AGS-J, Shimadzu Corp., Tokyo, Japan).

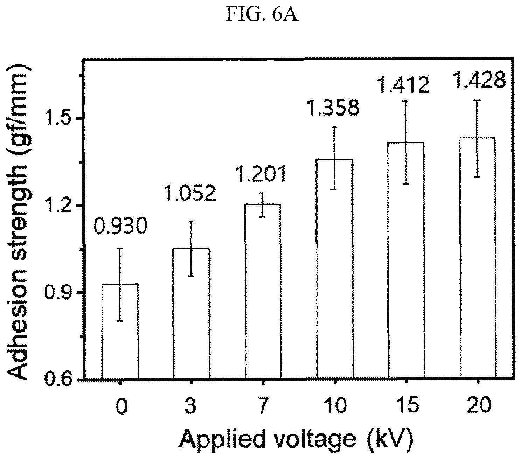

The analysis results of the negative electrodes of Examples 1A to 5A and Comparative Example 1A are shown in FIG. 6A. FIG. 6A shows the results of measuring the adhesion between the negative electrode active material layer and the Cu current collector according to each of the negative electrodes of Comparative Example 1A and Examples 1A to 5A. Referring to FIG. 6A, the negative electrodes of Examples 1A to 5A exhibited increased adhesion strength, compared with the negative electrode of Comparative Example 1A.

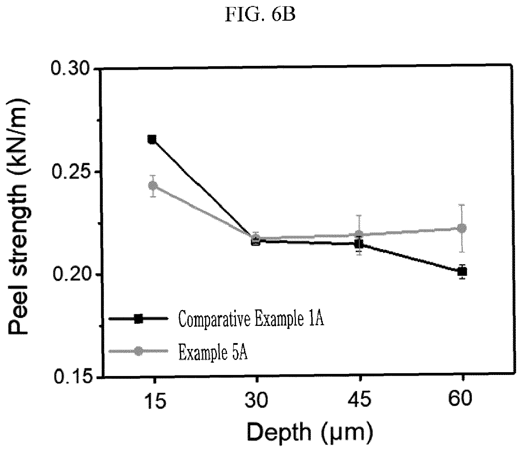

In order to analyze longitudinal binder distributions of the negative electrode treated with no electric field (with no electric field (w/o)) according to Comparative Example 1A and the negative electrode treated with an electric field according to Example 5A (with an electric field (w)), peel strength was obtained by scratching the negative electrode surface toward the inner layer every 15 $\mu$m using a surface and interface cutting analysis system (SAICAS). The results are shown in Table 1 and FIG. 6B. FIG. 6B is a graph showing the results of evaluating the peel strength according to depth from the negative electrode surface of the negative electrodes according to Example 5A and Comparative Example 1A.

[Table 1]

| Layer | Vertical depth ($\mu$m) | Comparative Example 1A | | Example 5A | |
|---|---|---|---|---|---|
| | | Peel strength (kN/m) | Strength retention (%) | Peel strength (kN/m) | Strength retention (%) |
| upper layer | 15 | 0.2655 | 100 | 0.2430 | 100 |

(continued)

| Layer | Vertical depth ($\mu$m) | Comparative Example 1A | | Example 5A | |
|---|---|---|---|---|---|
| | | Peel strength (kN/m) | Strength retention (%) | Peel strength (kN/m) | Strength retention (%) |
| middle layer | 30 | 0.2155 | 81.2 | 0.2167 | 89.2 |
| | 45 | 0.2135 | 80.4 | 0.2180 | 89.7 |
| lower layer | 60 | 0.1995 | 75.1 | 0.2207 | 90.8 |

Referring to Table 1 and FIG. 6B, the negative electrodes of Example 5A and Comparative Example 1A exhibited the highest peel strength of an upper layer, which was probably due to binder behaviors to the negative electrode surface during the negative electrode drying process. The peel strength of the negative electrodes of Example 5A and Comparative Example 1A gradually decreased from the upper layer thereof to the lower layer (near the Cu interface). The middle layer and the lower layer of the negative electrode according to Comparative Example 1A exhibited about 20% to 25% lower peel strength than the upper layer, but the peel strength of the negative electrode of Example 5A decreased just by about 10%. This shows that the negative electrode of Example 5A had a uniform binder distribution in the longitudinal direction.

Accordingly, referring to Table 1 and FIG. 6B, the longitudinal direction peel strength analysis of the negative electrode of Example 5A shows that the binder migration behavior was successfully controlled by applying an electric field during the drying process.

**Evaluation Example 2: Electrolyte permeability**

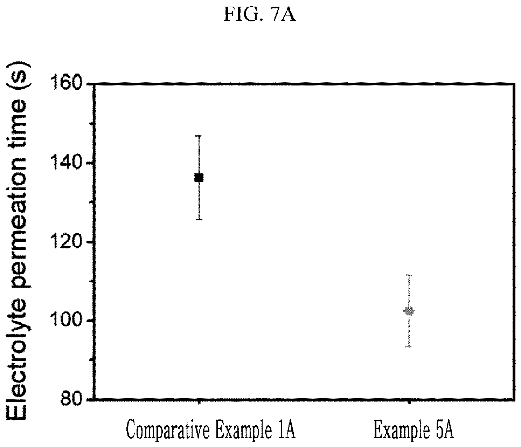

An electrolyte permeability test of the negative electrodes of Example 5A and Comparative Example 1A was performed by dropping 20 mg of an electrolyte (fluoroethylene carbonate additive (10 wt% of FEC (Starlyte from Panax Etec Co., Ltd., Busan, Korea) in EC/DMC/DEC: 1/1/2 volume%) in ethylene carbonate/dimethyl carbonate/diethyl carbonate containing 1.5 M $LiPF_6$ onto the negative electrode surfaces of Example 5A and Comparative Example 1A. Herein, the time taken for the electrolyte to completely permeate each of the negative electrodes was measured. The results are shown in FIG. 7A. FIG. 7A shows the electrolyte permeability evaluation results of the negative electrodes according to Example 5A and Comparative Example 1A.

Referring to FIG. 7A, the negative electrode of Example 5A exhibited the electrolyte penetration time of 102.5 seconds, which was less (e.g., lower) than 136.2 seconds of the negative electrode of Comparative Example 1A. The negative electrode of Example 5A is considered to exhibit better electrolyte permeability due to the binder migration behavior suppression during the drying. In general, electrolyte permeability is closely related to binder and pore distributions of a negative electrode, which plays an important role in electrochemical characteristics.

A binder on the negative electrode surface may limit electrolyte transfer through pores of the negative electrode to slow down a speed of Li-ion kinetics and deteriorate electrochemical performance of rechargeable lithium batteries.

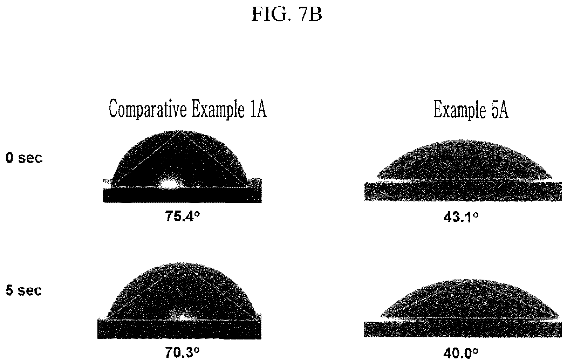

In order to analyze affinity between the electrolyte and the negative electrode surface, a contact angle of the negative electrode with a droplet of the electrolyte (prepared by dissolving 1.5 M $LiPF_6$ in ethylene carbonate/dimethyl carbonate/diethyl carbonate (EC/DMC/DEC: 1/1/2 in a volume ratio and adding a fluoroethylene carbonate additive (10 wt% FEC, Starlyte from Panax Etec Co., Ltd., Busan, Korea) thereto) was more than 5 times measured by using a contact angle analysis equipment (Phoenix 300, SEO, Suwon, South Korea (contact angle analyzer)). One contact angle with one electrolyte droplet among them is shown in FIG. 7B. FIG. 7B shows the contact angle measurement results (0 sec and 5 sec) of the electrolyte with the surface of each of the negative electrodes according to Example 5A and Comparative Example 1A.

Referring to FIG. 7B, the electric field-treated negative electrode according to Example 5A, compared with no electric field-treated negative electrode according to Comparative Example 1A, exhibited a smaller contact angle with the electrolyte, which confirmed that the negative electrode of Example 5A had better affinity with the electrolyte.

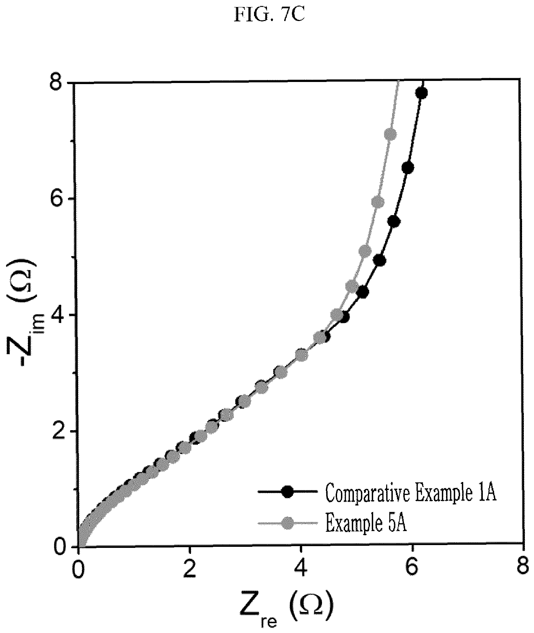

In order to explain electrolyte transport through pores of the negative electrodes, an electrochemical impedance spectroscopy (EIS) analysis of a negative electrode symmetric (2032 circular) cell fabricated by using the same negative electrode as a working electrode and a counter electrode was conducted. The EIS (Electrochemical Impedance Spectroscopy) analysis was conducted at an open-circuit voltage of each cell with a frequency range of 100 kHz to 1Hz and an amplitude of 20 mV by using Potentiostat (ZIVE BP2A, Won-ATech Co., Ltd., Korea). The results are shown in FIG. 7C. FIG. 7C shows EIS spectra of the negative electrode symmetric cells according to Example 5A and Comparative Example 1A.

Referring to FIG. 7C, the symmetric cell including the negative electrode of Example 5A exhibited ion resistance ($R_{ion}$) of 15.9 Ω, while the symmetric cell including the negative electrode of Comparative Example 1A exhibited ion resistance ($R_{ion}$) of 17.1 Ω, which was higher than that of the cell including the negative electrode of Example 5A. The negative electrodes were obtained through a circular electrode punching machine (Wellcos Corporation, WCH-125) with a diameter of 14 mm, where the electrode area (d) is 1.54 $cm^2$. $R_{ion}$ was calculated by tripling a difference between 'a' and 'b' in the obtained EIS spectra, where 'a' represents the x-intercept value and 'b' signifies the $Z_{re}$ value at the point at which the slope increases sharply.

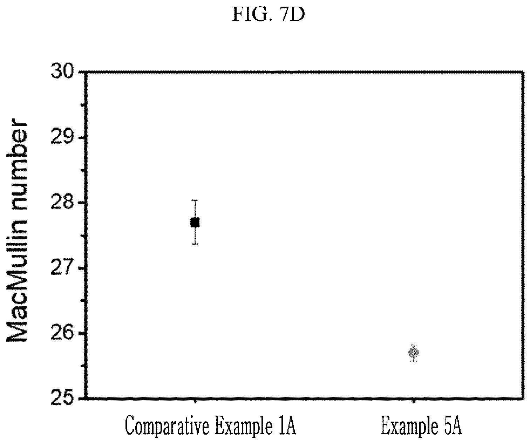

In order to clarify the electrolyte transport in the negative electrodes regardless of a thickness of the negative electrodes, the MacMullin number ($N_M$) was calculated and provided in FIG. 7D. FIG. 7D is a graph showing the results of calculating the MacMullin number of the negative electrodes manufactured according to Example 5A and Comparative Example 1A. The MacMullin number is obtained according to Equation 1:

[Equation 1]

$$N_M = \frac{R_{ion} \cdot A \cdot \sigma_0}{d} \quad (1)$$

wherein $R_{ion}$ is the ionic resistance of the negative electrode (Ω), A is an area of the electrode ($cm^2$), $\sigma_o$ is the ionic conductivity of the electrolyte (S $cm^{-1}$), and d is the thickness of the electrode (μm).

Parameters required to calculate the $N_M$'s of the negative electrodes of Example 5A and Comparative Example 1A are listed in Table 2.

[Table 2]

| | $R_{ion}$ (Ω) | A ($cm^2$) | $\sigma_o$ (S $cm^{-1}$) | d (μm) |
|---|---|---|---|---|
| Comparative Example 1A | 17.1 | 1.54 | 8.1 × 10⁻³ | 77 |
| Example 5A | 15.9 | | | |

In Table 2, the ionic conductivity of the electrolyte was obtained from the electrolyte manufacturer (Starlyte from Panax Etec Co., Ltd., Busan, Korea). The electrode thickness was measured using a micrometer (SM293-025, Sincon).

Referring to FIG. 7D, the negative electrode of Example 5A exhibited $N_M$ of 25.7, while the negative electrode of Comparative Example 1A exhibited $N_M$ of 27.7, which is higher than $N_M$ of the negative electrode of Example 5A. This result is in good agreement that of the electrolyte permeability test, which confirms that Li-ion kinetics were improved by using an electric field during the drying process to suppress the binder migration behavior.

**Examples 1H to 5H and Comparative Example 1H: Manufacturing of half-cells**

Each of the electrodes of Examples 1A to 5A and Comparative Example 1A, before manufactured into a half-cell, was dried at 130 °C for 4 hours under vacuum. Each (2032 circular) coin type half-cell according to Examples 1H to 5H and Comparative Example 1H was manufactured by using a lithium metal (a thickness: 200 μm) as a counter electrode.

**Evaluation Example 3: Charge/discharge efficiency and voltage profile of half cells**

Electrochemical characteristics of the coin type half-cells of Examples 1H to 5H and Comparative Example 1H were evaluated by using a battery cycle tester (TOSCAT 3000, Toyo System, Tokyo Co., Ltd., Japan).

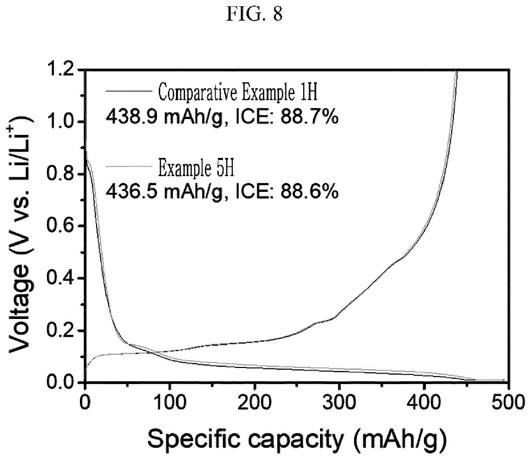

FIG. 8 shows voltage profiles at the first 0.1 C cycle of the half-cells according to Example 5H and Comparative Example 1H within the voltage range of 0.01 to 1.2 V vs. Li/Li⁺.

Referring to FIG. 8, the half-cell of Comparative Example 1H exhibited charge (delithiation) capacity of 438.9 mAh $g^{-1}$ and coulomb efficiency of 88.7%, which were almost equal to 436.5 mAh $g^{-1}$ of the charging (delithiation) capacity and 88.6% of the coulomb efficiency of the half-cell of Example 5H having an electric field.

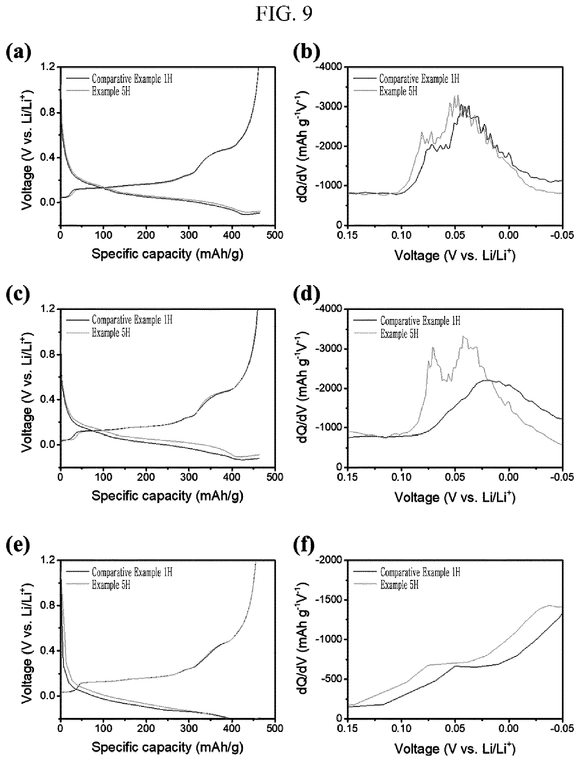

In order to analyze discharge (lithiation) capacity characteristics according to application of the electric field, a voltage profile was measured, while a discharge C-rate was increased to 0.5 C, 1.0 C, and 2.0 C, and the results are shown in FIG. 9.

Herein, the charge C-rate was set at 0.2 C. In order to clarify the Li-ion kinetics during the discharge, termination conditions of discharge patterns of the half-cells were set at a voltage range of -0.5 V and areal capacity of 5.5 mAh $cm^{-2}$.

FIG. 9 shows the voltage profiles of the half-cells of Example 5H and Comparative Example 1H after the formation cycle at a discharge (lithiation) speed of (a) 0.5 C, (c) 1.0 C, and (e) 2.0 C and each differential capacity (b), (d), and (f) according to a voltage (differential capacity vs. voltage (dQ/dV vs. V)), which was obtained from each discharge curve of (a), (c), and (e).

Referring to (a), (c), and (e) of FIG. 9, as the discharge C-rate was increased to 0.5, 1.0, and 2.0 C, in both of the negative electrodes included in the half-cells of Example 5H and Comparative Example 1H, the overpotential of lithiation increased. However, compared with the negative electrode of the half-cell of Comparative Example 1H, the negative electrode of the half-cell of Example 5H exhibited relatively small overpotential, which is presumed to be obtained by improved Li-ion kinetics.

FIG. 9(b) shows differential capacity vs. voltage curves of the cells of Example 5H and Comparative Example 1H at the discharge rate of 0.5 C. Two peaks in FIG. 9(b) are related to Li ion intercalation into a graphite material. The negative electrode of the half-cell of Example 5H exhibited prominent peak intensity and small overpotential, compared with the negative electrode of the half-cell of Comparative Example 1H, which shows that Li-ions were easily penetrated into the graphite material. Referring to FIG. 9(d), at the discharge speed of 1.0 C, the negative electrode of the half-cell of Example 5H clearly exhibited two peaks in the Li ion intercalation into the graphite material. In contrast, the negative electrode of the half-cell of Comparative Example 1H exhibited one peak related to the Li-ion intercalation because of a large overpotential during the discharge due to low Li-ion kinetics. Referring to FIG. 9(f), the lithium ion intercalation peak was not observed at either one of the negative electrodes for the graphite material at the large current of 2.0 C. However, the overpotential of the negative electrode of the cell of Example 5H was still smaller than that of the negative electrode of the cell of Comparative Example 1H. This result shows that the lithium ion transfer was improved by controlling the binder behavior through the electric field during the drying process to induce a uniform longitudinal binder distribution in the negative electrode.

**Evaluation Example 4: Surface image of the negative electrode after charging and discharging the half cell**

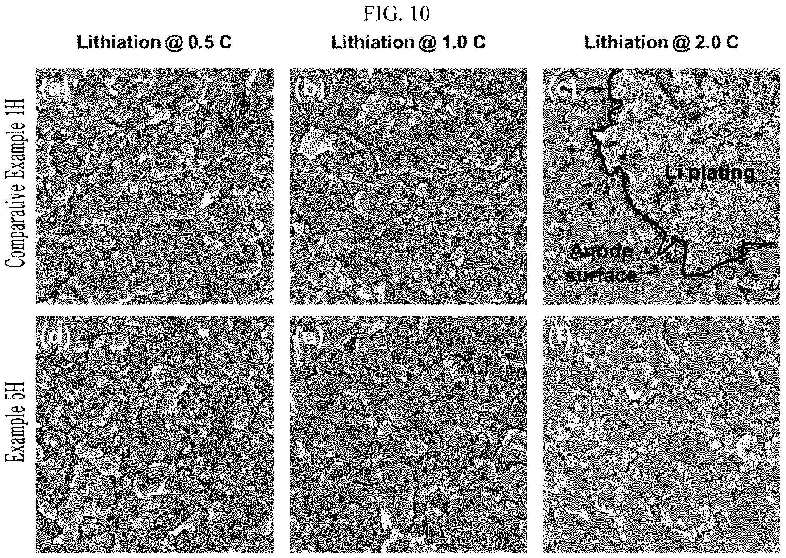

Each of the negative electrode half-cells was discharged (lithiated) at 0 V after the formation cycle and then, disassembled in a glove box filled with Ar. Each of the negative electrodes obtained therefrom was thoroughly washed with dimethyl carbonate and dried. Top view images of the recovered negative electrodes were examined with a field emission scanning electron microscope (FE-SEM, JSM-7600F, JEOL Ltd., Tokyo, Japan). The results are shown in FIG. 10.

FIG. 10 shows surface images of the negative electrodes of the half-cells of Example 5H and Comparative Example 1H according to a discharge (lithiated) C-rate of 0.5, 1.0, and 2.0 after the formation cycle.

In the negative electrode of the half-cell of Comparative Example 1H, no lithium plating was observed on the negative electrode surface during the discharge at 0.5 and 1.0 C, but at 2.0 C, lithium plating was observed on the negative electrode surface (FIG. 10(a to c)). This is obtained due to a large overpotential during the discharge at 2.0 C, which results from high ion resistance of the negative electrode having no electric field.

However, in the negative electrode of the half-cell of Example 5H, since the binder behavior was controlled during the drying by using the electric field to improve the ion resistance, no Li plating appeared at all the discharge C-rates of 0.5, 1.0, and 2.0. This means excellent discharge (lithiation) characteristics at high C-rates (FIG. 10(d) to (f)).

**Examples 1F to 5F: Manufacture of full cells**

Each of the electrodes of Example 1A to 5A and Comparative Example 1A, before being manufactured into a full cell, was dried at 130 °C for 4 hours under vacuum. $LiNi_{0.8}Co_{0.1}Al_{0.1}O_2$ (NCA), a PVdF binder, and carbon black were mixed in N-methyl pyrrolidone at a weight ratio of 97:1.5:1.5 to prepare a slurry for forming a positive electrode active material layer, and then coated on an Al foil, dried, and compressed to manufacture a positive electrode having an areal capacity of 5 mAh cm$^{-2}$. Each full cell was manufactured at an N/P ratio of 1.1/1 using the positive electrode and each negative electrode prepared in Examples 1A to 5A and Comparative Example 1A.

**Evaluation Example 5: Initial charge/discharge voltage profile of full cell**

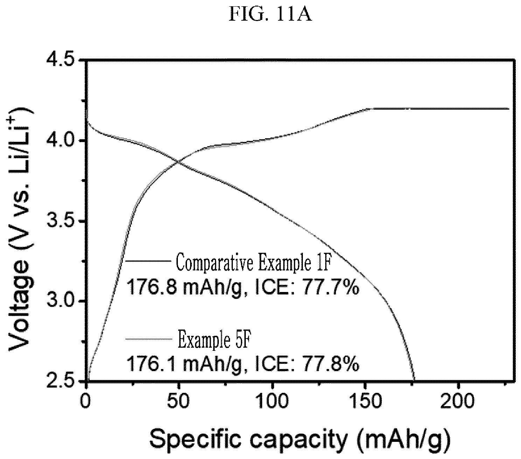

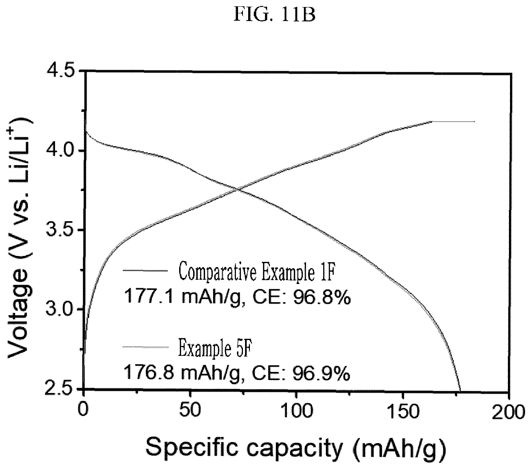

FIGS. 11A and 11B show initial charge/discharge voltage profiles of the full cells of Example 5F and Comparative Example 1F respectively at 0.1 C and 0.2 C. Similar to the half-cell results of Evaluation Example 3, there was no noticeable difference between the full cells of Example 5F and Comparative Example 1F due to low currents of 0.1 and 0.2 C.

**Evaluation Example 6: EIS evaluation of full cell**

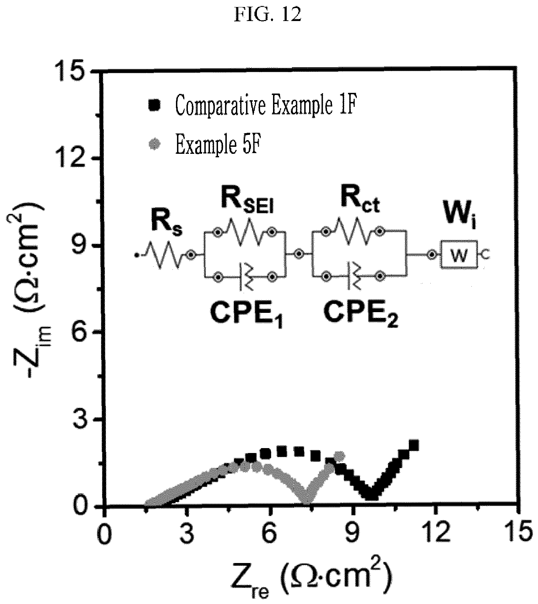

FIG. 12 shows EIS results of the full cells of Example 5F and Comparative Example 1F after each formation cycle at 0.1 and 0.2 C. The results are summarized in Table 3.

Referring to FIG. 12 and Table 3, the full cell of Example 5F exhibited lower solution resistance ($R_s$, high frequency resistance), solid electrolyte interface (SEI) layer ($R_{SEI}$, first semicircle in the high frequency range), and charge transfer ($R_{ct}$, second semicircle in the middle frequency range) than that of Comparative Example 1F.

[Table 3]

|  | $R_s$ ($\Omega \cdot cm^2$) | $R_{SEI}$ ($\Omega \cdot cm^2$) | $R_{ct}$ ($\Omega \cdot cm^2$) |
|---|---|---|---|
| Comparative Example 1F | 2.001 | 2.974 | 4.816 |
| Example 5F | 1.641 | 2.101 | 3.039 |

**Evaluation Example 7: Evaluation of high-rate charging characteristics of full cell**

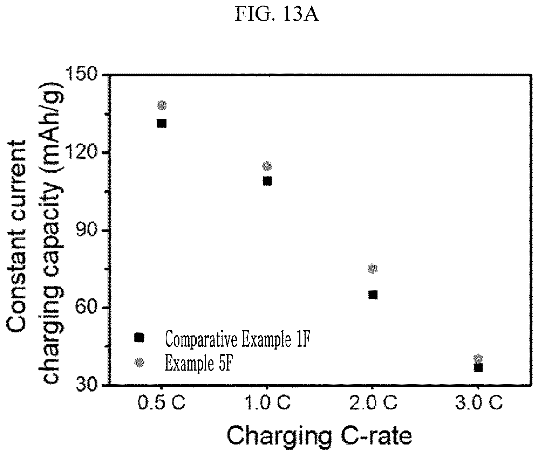

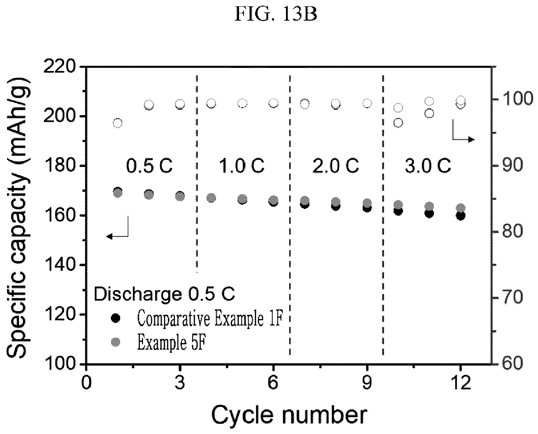

The high-rate charging test results of the full cells of Example 5F and Comparative Example 1F are shown in FIGS. 13A and 13B. High-rate charging characteristics of the full cells were evaluated, as shown in FIG. 13B, by maintaining a discharge rate at 0.5 C but changing a charge rate from 0.5 C to 3.0 C.

Referring to FIG. 13B, the full cells of Example 5F and Comparative Example 1F, which were charged under the constant current and constant voltage (CC-CV) condition, exhibited no noticeable difference in capacity maintenance at overall C-rates. However, referring to FIG. 13A, when charge capacity was considered only in a constant current (CC) region, the full cell of Example 5F exhibited high charge capacity within 0.5 C to 3.0 C, compared with the full cell of Comparative Example 1F.

This result shows that high-rate charging characteristics were improved by using the electric field-treated negative electrode to improve Li-ion kinetics.

**Evaluation Example 8: Evaluation of cycle-life characteristics of full cell**

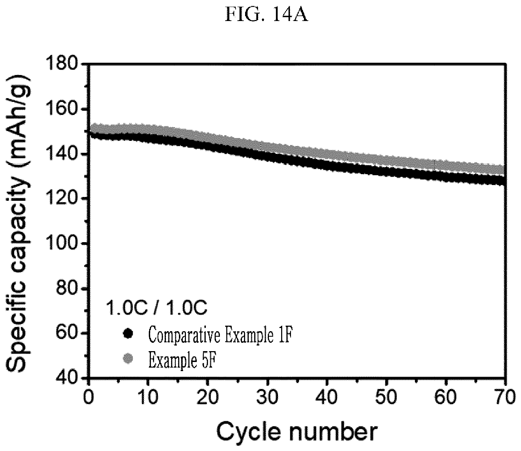

In order to evaluate cycle-life characteristics, each of the full cells of Example 5F and Comparative Example 1F was 70 cycles charged and discharged at 1.0 C, and the results are shown in FIG. 14A. FIG. 14A is a graph showing cycle-life characteristics of the full cells according to Example 5F and Comparative Example 1F at 1.0 C.

Referring to FIG. 14A, the full cell of Comparative Example 1F exhibited capacity retention of 85.5% at the 70th cycle, but the full cell of Example 5F exhibited capacity retention of 87.7% at the 70th cycle after the 0.1 and 0.2 C formation cycles.

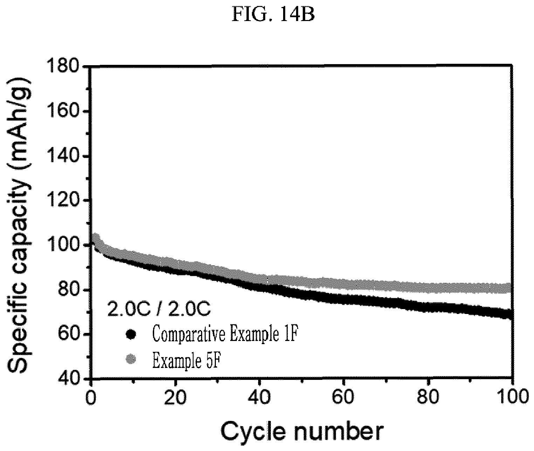

Likewise, the full cells of Example 5F and Comparative Example 1F were also evaluated at 2.0 C for 100 cycles after the formation cycle, and the results are shown in FIG. 14B. FIG. 14B is a graph showing cycle-life characteristics of the full cells according to Example 5F and Comparative Example 1F at 2.0 C.

Referring to FIG. 14B, the full cell of Example 5F exhibited capacity retention of 81.7% at the 40th cycle but after the 40 cycles, excellent stable cycling characteristics and capacity retention of 77.4% at the 100th cycle. This may be achieved due to stress relief of a Si-based material during the cycle test.

On the other hand, the full cell of Comparative Example 1F exhibited a continuous decrease in capacity and thus capacity retention of 79.4% at the 40th cycle to capacity retention of 66.4% at the 100th cycle.

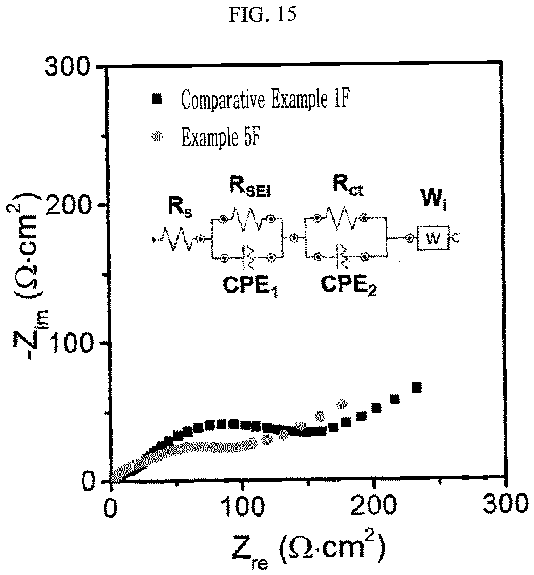

The EIS evaluation results of the full cells of Example 5F and Comparative Example 1F at 2.0 C after 100 cycles are shown in FIG. 15. FIG. 15 shows the EIS evaluation results of the full cells according to Example 5F and Comparative Example 1F after 100 cycles at 2.0 C. Referring to FIG. 15, the full cell of Example 5F exhibited lower charge transfer resistance than that of Comparative Example 1F.

It is confirmed that an electric field may be applied during the drying process to suppress binder migration behaviors and resultantly, improve Li-ion kinetics and high-rate charging characteristics of rechargeable lithium batteries.

A battery manufacturing system including a battery electrode manufacturing device, a battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

While this disclosure has been described in connection with what is presently considered to be practical example embodiments, it is to be understood that the invention is not limited to the disclosed embodiments. On the contrary, it is intended to cover various modifications and equivalent arrangements included within the scope of the appended claims.

**<Description of Symbols>**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

**Claims**

1. A method of manufacturing an electrode for a rechargeable lithium battery, comprising

    preparing an electrode active material layer slurry including an electrode active material and a polymer binder, and
    coating the electrode active material layer slurry on a current collector and drying it while applying an electric field to form an active material layer,
    wherein the polymer binder includes a water-soluble binder and an ionic polymer.

2. The method of claim 1, wherein
    the electrode active material includes a negative electrode active material or a positive electrode active material.

3. The method of claim 2, wherein
    the negative electrode active material includes a carbon-based negative electrode active material, a silicon-carbon composite, or a combination thereof.

4. The method of claim 2, wherein
    the negative electrode active material includes crystalline carbon, amorphous carbon, or a combination thereof.

5. The method of claim 2, wherein
    the negative electrode active material includes graphite, silicon-carbon composite, or a combination thereof.

6. The method of any one of claims 1 to 5, wherein
    the water-soluble binder includes a rubber-based binder, polymer resin binder or a combination thereof.

7. The method of claim 6, wherein
    the rubber-based binder includes a styrene-butadiene rubber, an acrylated styrene-butadiene rubber, an acrylonitrile-butadiene rubber, an acrylic rubber, a butyl rubber, a fluorine rubber, or a combination thereof.

8. The method of claim 6 or claim 7, wherein
    the polymer resin binder includes polyethylene oxide, polyvinylpyrrolidone, polyacrylonitrile, an ethylene propylene diene copolymer, polyvinylpyridine, chlorosulfonated polyethylene, latex, a polyester resin, an acrylic resin, a phenol resin, an epoxy resin, a polyvinyl alcohol, or a combination thereof.

9. The method of any one of claims 1 to 8, wherein
   the ionic polymer includes a cellulose-based compound.

10. The method of any one of claims 1 to 8, wherein
    the ionic polymer includes carboxylmethyl cellulose, hydroxypropylmethyl cellulose, methyl cellulose, an alkali metal salt thereof, or a combination thereof.

11. The method of any one of claims 1 to 10, wherein

    the water-soluble binder is included in an amount of about 0.1 wt% to about 10 wt% based on 100 wt% of the negative electrode active material layer, optionally
    the ionic polymer is included in an amount of about 0.1 wt% to about 3 wt% based on 100 wt% of the negative electrode active material layer.

12. An electrode for a rechargeable lithium battery comprising the electrode manufactured according to any one of claims 1 to 11.

13. The electrode of claim 12, wherein
    the electrode has a contact angle with respect to the electrolyte of less than or equal to about 60 degrees measured using contact angle analysis equipment (Phoenix 300, SEO, Suwon, South Korea).

14. The electrode of claim 12 or claim 13, wherein
    the electrode has a MacMullin number ($N_M$) calculated using Equation 1 of less than or equal to about 26.5:
    [Equation 1]

$$N_M = \frac{R_{ion} \cdot A \cdot \sigma_0}{d} \quad (1)$$

    wherein $R_{ion}$ is the ionic resistance of the negative electrode ($\Omega$), A is an area of the electrode ($cm^2$), $\sigma_0$ is the ionic conductivity of the electrolyte ($S\ cm^{-1}$), and d is the thickness of the electrode ($\mu m$).

15. A rechargeable lithium battery comprising the electrode manufactured according to any one of claims 1 to 11.

FIG. 1A

Graphite/Si-C

Binder migration
w solvent evaporation

CMC

SBR/CMC

EP 4 358 170 A1

FIG. 1B

Graphite/Si-C

Applied voltage

20b

20a

Casted electrode

$20 \begin{cases} 20b \\ 20a \end{cases}$

Electric field
w applied voltage

Anode prepared
w electric field

CMC

SBR/CMC

FIG. 2

FIG. 3

FIG. 4

FIG. 5

FIG. 6A

FIG. 6B

FIG. 7A

FIG. 7B

Comparative Example 1A | Example 5A

0 sec

75.4° | 43.1°

5 sec

70.3° | 40.0°

FIG. 7C

FIG. 7D

FIG. 8

FIG. 9

FIG. 10

Lithiation @ 0.5 C     Lithiation @ 1.0 C     Lithiation @ 2.0 C

EP 4 358 170 A1

FIG. 11A

FIG. 11B

FIG. 12

FIG. 13A

FIG. 13B

FIG. 14A

FIG. 14B

FIG. 15

Europäisches
Patentamt

European
Patent Office

Office européen
des brevets

# EUROPEAN SEARCH REPORT

Application Number

EP 23 20 4801

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/196977 A1 (VITZROCELL CO LTD [KR]; MAKESENS INC [CA]) 22 September 2022 (2022-09-22) * abstract * * figures 3, 4 * * text referring to fig. 3 * * table 1 * * claims 1-12 * | 1-15 | INV. H01M4/04 H01M4/1393 H01M4/62 |
| X | KR 2022 0128932 A (VITZROCELL CO LTD [KR]; MAKESENS INC [CA]) 22 September 2022 (2022-09-22) * abstract * * paragraphs [0052] - [0053] * * paragraphs [0068] - [0079] * * paragraphs [0117] - [0130] * * claims 1-13 * | 1-15 | |
| A | WO 2022/220474 A1 (SAMSUNG SDI CO LTD [KR]) 20 October 2022 (2022-10-20) * the whole document * | 1-15 | |

TECHNICAL FIELDS SEARCHED (IPC)

H01M

The present search report has been drawn up for all claims

| Place of search | Date of completion of the search | Examiner |
|---|---|---|
| Munich | 13 March 2024 | Stachowiak, Olaf |

EPO FORM 1503 03.82 (P04C01)

## ANNEX TO THE EUROPEAN SEARCH REPORT
## ON EUROPEAN PATENT APPLICATION NO.

EP 23 20 4801

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2024

| Patent document cited in search report | | Publication date | Patent family member(s) | | Publication date |
|---|---|---|---|---|---|
| WO 2022196977 | A1 | 22-09-2022 | CA | 3210793 A1 | 22-09-2022 |
| | | | EP | 4309223 A1 | 24-01-2024 |
| | | | JP | 2024510331 A | 06-03-2024 |
| | | | WO | 2022196977 A1 | 22-09-2022 |
| KR 20220128932 | A | 22-09-2022 | CN | 116982171 A | 31-10-2023 |
| | | | CN | 116982173 A | 31-10-2023 |
| | | | CN | 117083730 A | 17-11-2023 |
| | | | KR | 102447011 B1 | 23-09-2022 |
| | | | KR | 20220128932 A | 22-09-2022 |
| | | | KR | 20220128947 A | 22-09-2022 |
| WO 2022220474 | A1 | 20-10-2022 | CN | 116472631 A | 21-07-2023 |
| | | | EP | 4210143 A1 | 12-07-2023 |
| | | | KR | 20230175176 A | 29-12-2023 |
| | | | US | 2024047746 A1 | 08-02-2024 |
| | | | WO | 2022220474 A1 | 20-10-2022 |

EPO FORM P0459

For more details about this annex : see Official Journal of the European Patent Office, No. 12/82